# EUROPÄISCHE PATENTANMELDUNG

(11) **EP 0 916 882 A2**
(43) Veröffentlichungstag der Anmeldung: **19.05.1999**
(21) Anmeldenummer: 98811075.5
(22) Anmeldetag: 26.10.1998
(51) Int. Cl.: F16K 31/124

(54) **Axialventil**

(30) Priorität: 12.11.1997 CH 2606/97
(71) Anmelder: Georg Fischer Rohrleitungssysteme AG, CH-8201 Schaffhausen (CH)
(72) Erfinder: Schalk, Adelbert, 79793 Wutöschingen (DE); Stumpp, Jürgen, 79771 Klettgau (DE)
(74) Vertreter: Rottmann, Maximilian R.

(57) **Zusammenfassung**

Ein Ventil weist einen in einem axialen Durchflusskanal (16) eines Gehäuses (10) angeordneten Strömungskörper (18) und einen Kolben (48) auf, der mit einem in axialer Richtung (x) verschiebbaren Verschlussteil (38) verbunden ist. Der Kolben (48) unterteilt einen Zylinderraum (50) in zwei Zylinderteilräume (A, B), wobei zum Oeffnen und Schliessen des Ventils die Zylinderteilräume (A, B) wechselweise mit dem Druck des aus der Einlaufseite des Ventils abgezweigten Durchflussmediums beaufschlagt werden. Die Einlaufseite des Ventils ist über ein 4/2-Weg-Steuerventil (56) mit den Zylinderteilräumen (A, B) verbindbar.

## Beschreibung

Die Erfindung betrifft ein Ventil mit in einem axialen Durchflusskanal eines Gehäuses angeordnetem Strömungskörper und einem Kolben, der mit einem in axialer Richtung verschiebbaren Verschlussteil verbunden ist und einen Zylinderraum in zwei Zylinderteilräume unterteilt, wobei zum Oeffnen und Schliessen des Ventils die Zylinderteilräume wechselweise mit dem Druck des aus der Einlaufseite des Ventils abgezweigten Durchflussmediums beaufschlagt werden.

In grossen Bewässerungsanlagen werden mittels zentral angesteuerter Armaturen einzelne Sektoren zeitgerecht bewässert. Hierzu wurden bisher Ventile mit einer 3/2-Weg-Ansteuereinrichtung verwendet. Mittels eines Schaltsignals wird ein Magnetventil betätigt, welches über eine entsprechend ausgelegte Konstruktion den Rohrleitungsdruck verwendet, um die eigentliche Armatur zu betätigen. Insbesondere bei grossen Bewässerungsanlagen entstehen durch weitreichende Elektroinstallationen hohe Kosten. Da bekannte Armaturen eher bescheidene Durchflusswerte aufweisen, sind zudem oft Zusatzrohrleitungen erforderlich, was zu einer weiteren Kostensteigerung führt.

Der Erfindung liegt daher die Aufgabe zugrunde, ein kostengünstiges Bewässerungsventil zu schaffen, dessen Einsatz einen nur geringen Installationsaufwand erfordert.

Zur erfindungsgemässen Lösung der Aufgabe führt, dass die Einlaufseite des Ventils über ein 4/2-Weg-Steuerventil mit den Zylinderteilräumen verbindbar ist.

Bei einer bevorzugten Ausführungsform des erfindungsgemässen Ventils ist das Verschlussteil als Schieberhülse ausgestaltet und mit einer als Kolben wirkenden Ringscheibe verbunden, die an der zylindrischen Innenfläche eines Gehäuseteils in axialer Richtung gleitend verschiebbar ist und eine gegen den Strömungs körper bewegbare Stirnfläche aufweist, wobei die durch die Ringscheibe getrennten Zylinderteilräume über je eine Verbindungsleitung mit dem Steuerventil verbunden sind.

Ein zur Ansteuerung des erfindungsgemässen Ventils besonders geeignetes Steuerventil umfasst eine in einer zylindrischen Hülse drehbar gelagerte, über eine Leitung mit der Einlaufseite des Ventils verbundene Hohlwelle, wobei der Hülsenmantel Bohrungen und der Wellenmantel Bohrungen sowie axiale Ausnehmungen in einer Anordnung aufweist, dass in Abhängigkeit von der Drehstellung der Hohlwelle die Bohrungen und Ausnehmungen im Wellenmantel mit den Bohrungen im Hülsenmantel so kommunizieren, dass jeweils einer der Zylinderteilräume mit dem Durchflussmedium gefüllt und der andere nach aussen entlüftet wird.

Zweckmässigerweise ist das Steuerventil zur Uebermittlung eines Schaltsignals über Funk von einer zentralen Leitstelle ansteuerbar und weist eine über Solarzellen aufladbare Batterie als autonome Energieversorgung auf.

Durch die Integrierung des Steuerventils in die Ventilarmatur entsteht eine kompakte Einrichtung, die sich besonders für den Einsatz bei grossen Bewässerungsanlagen eignet.

Das Ventil wird vorzugsweise für Rohrleitungssysteme aus Kunststoff verwendet. Zumindest das Gehäuse, der Strömungskörper und das Verschlussteil mit Kolben sind ebenfalls bevorzugt aus Kunststoff hergestellt, beispielsweise aus Polyvinylchlorid, Polypropylen, Polybuten, Polyethylen, Polyvinylidenfluorid, oder Polyamid.

Ein weiterer Vorteil des Ventils liegt auch darin, dass nur geringe Verstellkräfte für die Oeffnungs- bzw. Schliessbewegung erforderlich sind, da auf das Verschlussteil nur geringe Kräfte durch den Druck des Durchflussmediums wirken. Der für die Steuerung des Verschlussteiles notwendige Druck ist nahezu unabhängig vom Druck des Mediums in der Rohrleitung.

Bei der Verwendung des Ventils als kostengünstiges Bewässerungsventil kann auf Elastomerdichtungen zugunsten von direkt angespritzten Dichtlippen verzichtet werden, da bei Bewässerungsanlagen eine geringe Undichtheit akzeptabel ist. Ebenso ist eine Entleerung bzw. Belüftung des Ventils nach aussen zulässig.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: ein Bewässerungsventil in Schliessstellung;
- Fig. 2: das Bewässerungsventil von Fig. 1 in Offenstellung.

Das Gehäuse 10 eines für grosse Bewässerungsanlagen geeigneten Axialventils weist einen zu den anschliessenden Rohrleitungen 12, 14 koaxialen Durchflusskanal 16 auf, in welchem ein Strömungskörper 18 angeordnet ist. Das Gehäuse 10 besteht aus einem Mittelteil 20 und beidseitig an diesem angeflanschten An schlussteilen 22, 24 mit Rohrstutzen 26 für die Rohrleitungen 12, 14.

Der Strömungskörper 18 ist mittels Stegen 28 mit einem äusseren Ring 30 verbunden, welcher zwischen dem Anschlussteil 22 und dem Mittelteil 20 zentrisch fest eingespannt angeordnet ist, wodurch eine zum Durchflusskanal 16 koaxiale Anordnung des Strömungskörpers 18 gegeben ist. Die Gehäuseteile 20, 22, 24 sind untereinander bevorzugt verklebt oder verschweisst.

Der Durchflusskanal 16 ist im Bereich des Strömungskörpers 18 im Durchmesser erweitert und strömungsgünstig ausgebildet.

Auch der Strömungskörper 18 ist durch die vorzugsweise etwa kegelförmige Ausbildung der gegenüberliegenden Anströmteile 32, 34 strömungsgünstig ausgebildet, wobei auch die Stege 28 im Querschnitt entsprechend strömungsgünstig gestaltet sind. Diese Anordnung erlaubt im gegensatz zum Stand der Technik sehr hohe Durchflusswerte.

Der Strömungskörper 18 weist eine kegelige Dichtfläche 36 auf, welche mit einem stirnseitig anliegenden Verschlussteil 38 die Absperrung für das Durchflussmedium bildet.

Das Verschlussteil 38 ist als Schieberhülse ausgebildet, die mit ihrem Aussenumfang in als Dichtlippen ausgestalteten Lagerpartien des Gehäusemittelteils 20 und des Anschlussteils 24 in axialer Richtung x gleitend verschiebbar gelagert ist.

Eine durchgehende Oeffnung 44 der Schieberhülse 38 ist Teil des Durchflusskanals 16, wobei die Stirnfläche 46 der Schieberhülse 38 an einem Ende zusammen mit der kegelförmigen Dichtfläche 36 die Durchfluss-Absperrung bildet. Eine an der Schieberhülse 38 angeformte Ringscheibe 48 bildet den Kolben eines Hubantriebes, wobei die Ringscheibe 48 einen zwischen dem Gehäuseteil 24 und der Schieberhülse 38 gebildeten Zylinderraum 50 in zwei Zylinderteilräume A, B unterteilt. Zur Speisung der Zylinderteilräume A, B mit einem die Schieberhülse 38 betätigenden Druckmedium ist in der angrenzenden Wandung des Anschlussteils 24 je ein Kanal 50, 52 angeordnet.

Ein Steuerventil 56 weist eine zylindrische Hülse 58 mit einer in dieser drehbar gelagerten Hohlwelle 60 auf. Der Hülsenmantel 62 ist mit zwei Verbindungsbohrungen 64, 66 und einer Entlüftungsbohrung 68 versehen.

Im Wellenmantel 70 sind paarweise je eine Radialbohrung 72, 74 und eine axiale Ausnehmung 76, 78 entsprechend den beiden Ventilstellungen "geschlossen" und "offen" einander diametral gegenüberliegend angeordnet.

In den beiden Ventilstellungen mündet jeweils eine der Radialbohrungen 72, 74 in eine der Verbindungsbohrungen 64, 66 im Hülsenmantel. Gleichzeitig verbindet jeweils eine der axialen Ausnehmungen 76, 78 an der Umfangfläche des Wellenmantels 70 die andere der beiden Verbindungsbohrungen 64, 66 mit der Entlüftungsbohrung 68.

Die beiden Verbindungsbohrungen 64, 66 stehen über Verbindungsleitungen 84, 86 mit den in die Zylinderteilräume A, B mündenden Kanälen 52, 54 in Verbindung.

Die Speisung des Steuerventils 36 mit dem zur Ansteuerung des Axialventils benötigten Druckmedium erfolgt über eine Leitung 80, welche die Einlaufseite des Ventils durch den Boden 82 der zylindrischen Hülse 58 mit dem Innern der Hohlwelle 60 verbindet. Die zur Ventilbetätigung erforderliche Drehung der Hohlwelle erfolgt über einen Elektromotor 88 mit Getriebe 90. Die Steuerung des Motors erfolgt über ein Schaltsignal, welches über Funk von einer zentralen Leitstelle übermittelt wird. In der Zeichnung nicht dargestellt ist die Energieversorgung des Motors mittels einer über Solarzellen aufladbaren Batterie sowie die Steuereinheit zum Empfang und zur Weiterleitung des Schaltsignals.

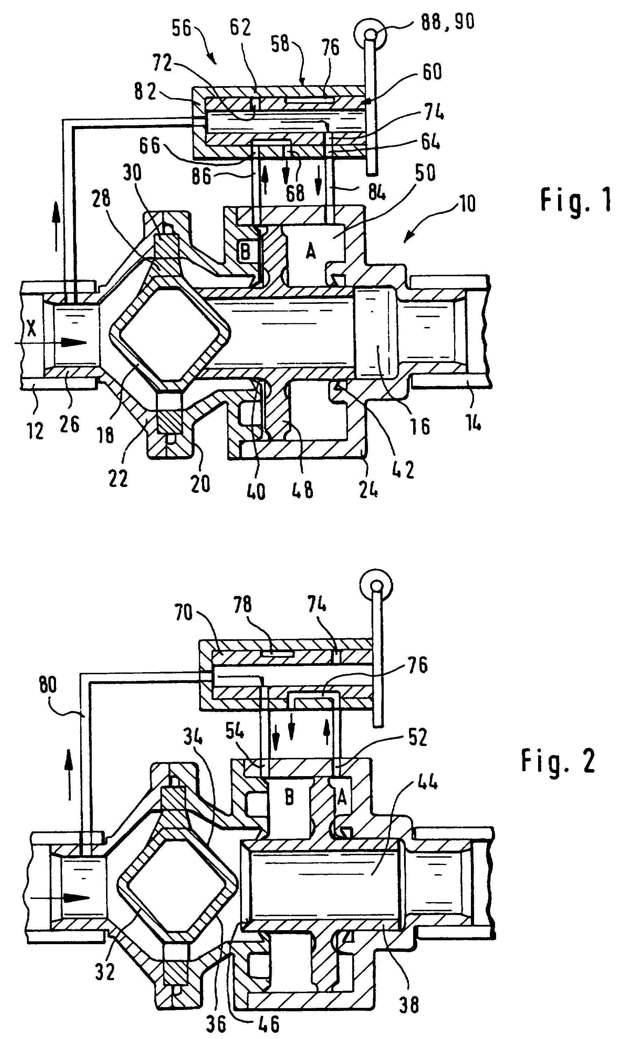

Bei der in Fig. 1 dargestellten Schliesslage des Ventils ist die Bohrung 74 im Wellenmantel 70 auf die Bohrung 64 in der zylindrischen Hülle 58 ausgerichtet. Gleichzeitig verbindet die axiale Ausnehmung 78 auf der Aussenseite des Wellenmantels 70 die andere Verbindungsbohrung 66 mit der Entlüftungsbohrung 68 in der zylindrischen Hülse 58. Bei dieser Ventilstellung wird der Zylinderteilraum A mit dem Druck des über die Leitung 80 abgezweigten Durchflussmediums beaufschlagt. Hierbei wird die Ringscheibe 48 gegen die Einlaufseite des Ventils bewegt, wodurch die Stirnfläche 46 der Schieberhülse 38 gegen die Dichtfläche 36 des Strömungskörpers 38 gepresst wird und den Ventildurchfluss verhindert.

Bei der in Fig. 2 gezeigten Offenstellung des Ventils bilden die Bohrungen 72 und 66 einen durchgehenden Kanal. Das über die Leitung 80 abgezweigte Durchflussmedium tritt damit über die Verbindungsleitung 86 in den Zylinderteilraum B ein und bewirkt durch den auf die Ringscheibe 48 einwirkenden Druck eine Verschiebung der Schieberhülse 38 in Durchflussrichtung, wodurch das Ventil in seiner Offenstellung gehalten wird.

Im dargestellten Beispiel wird durch ein Schaltsignal "öffnen" bzw. "schliessen" der Motor 88 veranlasst, die Hohlwelle 60 über das Getriebe 90 um jeweils 180° zu drehen. Selbstverständlich ist es auch möglich, die Bohrungen und Ausnehmungen so anzuordnen, dass die Hohlwelle zum Erreichen der beiden Schaltpositionen um weniger als 180° gedreht werden muss. Bei einer kompakten Ausführungsform des Ventils ist das Steuerventil 36 zudem in die Ventilarmatur integriert.

## Patentansprüche

1. Ventil mit in einem axialen Durchflusskanal (16) eines Gehäuses (10) angeordnetem Strömungskörper (18) und einem Kolben (48), der mit einem in axialer Richtung (x) verschiebbaren Verschlussteil (38) verbunden ist und einen Zylinderraum (50) in zwei Zylinderteilräume (A, B) unterteilt, wobei zum Oeffnen und Schliessen des Ventils die Zylinderteilräume (A, B) wechselweise mit dem Druck des aus der Einlaufseite des Ventils abgezweigten Durchflussmediums beaufschlagt werden,dadurch gekennzeichnet, dass die Einlaufseite des Ventils über ein integriertes 4/2-Weg-Steuerventil (56) mit den Zylinderteilräumen (A, B) verbindbar ist.

2. Ventil nach Anspruch 1, dadurch gekennzeichnet, dass das Verschlussteil als Schieberhülse (38) ausgestaltet und mit einer als Kolben wirkenden Ringscheibe (48) verbunden ist, die an der zylindrischen Innenfläche eines Gehäuseteils (24) in axialer Richtung (x) gleitend verschiebbar ist und eine gegen den Strömungskörper (18) bewegbare Stirnfläche (46) aufweist, wobei die durch die Ringscheibe (48) getrennten Zylinderteilräume (A, B) über je eine Verbindungsleitung (84, 86) mit dem Steuerventil (56) verbunden sind.

3. Ventil nach Anspruch 1 oder 2, dadurch gekennzeichnet, dass das Steuerventil (56) eine in einer zylindrischen Hülse (58) drehbar gelagerte, über eine Leitung (80) mit der Einlaufseite des Ventils verbundene Hohlwelle (60) umfasst, wobei der Hülsen-mantel (62) Bohrungen (64, 66, 68) und der Wellenmantel (70) Bohrungen (72, 74) sowie axiale Ausnehmungen (76, 78) in einer Anordnung aufweist, dass in Abhängigkeit von der Drehstellung der Hohlwelle (60) die Bohrungen und Ausnehmungen im Wellen-mantel mit den Bohrungen im Hülsenmantel so kommunizieren, dass jeweils einer der Zylinderteilräume (A, B) mit dem Durchfluss-medium gefüllt und der andere nach aussen entlüftet wird.

4. Ventil nach Anspruch 3, dadurch gekennzeichnet, dass die Hohlwelle (60) zur Ausführung ihrer Drehbewegung in die Schaltstellungen des Steuerventils (56) mit einem Elektromotor (88) und einem Getriebe (90) wirkverbunden ist.

5. Ventil nach einem der Ansprüche 1 bis 4, dadurch gekennzeichnet, dass das Steuerventil (56) zur Uebermittlung eines Schaltsignals über Funk von einer zentralen Leitstelle an-steuerbar ist und eine über Solarzellen aufladbare Batterie als autonome Energieversorgung aufweist.

6. Ventil nach einem der Ansprüche 1 bis 5, dadurch gekennzeichnet, dass das Steuerventil (56) in einer Ventilarmatur integriert ist.

7. Verwendung des Ventils nach einem der Ansprüche 1 bis 6 in Bewässerungsanlagen.
